# EUROPEAN PATENT APPLICATION

(11) **EP 3 196 503 A1**
(43) Date of publication of application: **26.07.2017**
(21) Application number: 15842080.2
(22) Date of filing: 04.09.2015
(51) Int. Cl.: F16F 9/32, B60G 15/06

(54) **SHOCK ABSORBER**

(30) Priority: 16.09.2014 JP 2014187260
(71) Applicant: KYB Corporation, Tokyo 105-6111 (JP)
(72) Inventor: CHIKAMATSU, Satoshi, Tokyo 105-6111 (JP); HIROSE, Mitsuhiko, Tokyo 105-6111 (JP)
(74) Representative: Grünecker Patent- und Rechtsanwälte PartG mbB
(86) International application number: PCT/JP2015/075226
(87) International publication number: WO 2016/043069

(57) **Abstract**

In a shock absorber 100, 200, an inner case 1 is biased in the axial direction relative to an outer case 2 made of resin by a spring 5, and the inner case 1 and the outer case 2 abut each other in the radial direction via ribs 2g, 8c.

## Description

### TECHNICAL FIELD

The present invention relates to a shock absorber.

### BACKGROUND ART

US5727662A discloses a twin-tube type shock absorber used in a strut-type suspension. An outer tube of this twin-tube type shock absorber is molded from a different material than that of an inner tube in order to reduce the weight. If the inner tube and the outer tube are formed of different materials, a dimensional difference in the axial direction may occur due to differences in the thermal expansion coefficient or the like. This twin-tube type shock absorber includes a biasing member that biases the inner tube in the axial direction relative to the outer tube in order to compensate for such a dimensional difference.

Further, JP2013-181582A discloses that in a shock absorber used in a strut-type suspension, the outer tube is made of resin in order to reduce the weight.

### SUMMARY OF INVENTION

In general, in a resin member formed by injection molding, deformation over time called creep occurs if a state in which a constant load is applied continues. Therefore, if the outer tube of a twin-tube type shock absorber is made of resin, it is necessary to prepare a biasing member that exerts a sufficient biasing force for maintaining a state in which the inner tube is constantly pressed against the outer tube in order to compensate for shifts of the inner tube relative to the outer tube in the axial direction caused by creep.

Further, in a twin-tube type shock absorber used in a strut-type suspension, since a connection part for connecting with the vehicle wheel side is joined to the side of the outer tube, a load input from the vehicle wheel side also acts in the radial direction of the shock absorber. Therefore, if the inner tube is not pressed against the outer tube with a sufficient axial force, the inner tube may shift in the radial direction relative to the outer tube. This shifting destabilizes the support of the vehicle wheel relative to the vehicle body and causes abnormal noises to occur.

In this way, when the outer tube of a twin-tube type shock absorber is made of resin, the inner tube must be pressed against the outer tube with a sufficient axial force to suppress shifting of the inner tube relative to the outer tube in the axial direction and radial direction. However, in order to obtain a large axial force, the size of the biasing member must be increased, and this may lead to an increase in the size of the shock absorber main body which accommodates the biasing member.

An object of the present invention is to suppress shifting of the inner tube relative to the outer tube in the axial direction and the radial direction in a twin-tube type shock absorber without increasing the size of the shock absorber main body even if the outer tube is made of resin.

According to one aspect of the present invention, a shock absorber includes: an inner case filled with hydraulic fluid; an outer case made of resin disposed so as to cover the inner case, the outer case forming a reservoir for storing the hydraulic fluid between the outer case and the inner case; a biasing member accommodated within the reservoir, the biasing member being configured to bias the inner case relative to the outer case in the axial direction of the outer case; and protrusions formed on either one of an outer peripheral surface of the inner case and an inner peripheral surface of the outer case so as to protrude toward and abut the other one of the outer peripheral surface of the inner case and the inner peripheral surface of the outer case.

### BRIEF DESCRIPTION OF DRAWINGS

FIG. 1 is a cross-section view of a shock absorber according to a first embodiment of the present invention;
FIG. 2 is a cross-section view along line II-II in FIG. 1; and
FIG. 3 is a cross-section view of a shock absorber according to a second embodiment of the present invention.

### DESCRIPTION OF EMBODIMENTS

Embodiments of the present invention will now be explained below while referring to the attached drawings.

### <First Embodiment>

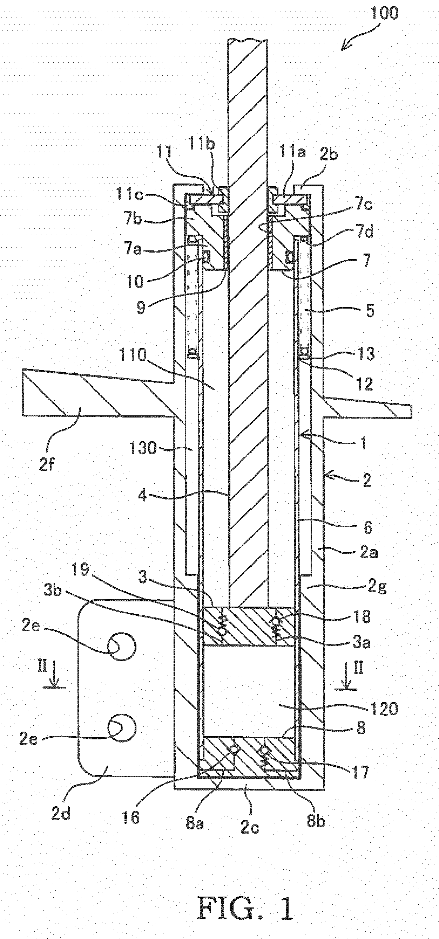

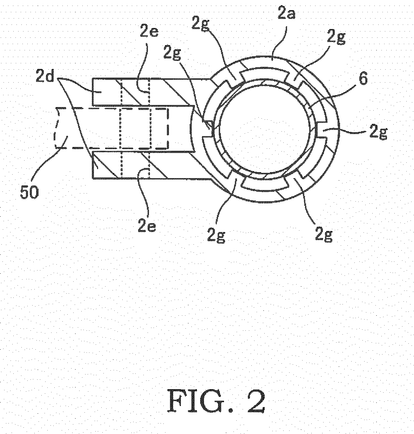

A shock absorber 100 according to a first embodiment of the present invention will now be explained referring to FIGS. 1 and 2. The shock absorber 100 shown in FIG. 1 is a twin-tube type shock absorber used in a strut-type suspension of a vehicle such as an automobile.

As shown in FIGS. 1 and 2, the shock absorber 100 includes the following: an inner case 1 that is filled with hydraulic oil which serves as a hydraulic fluid; an outer case 2 made of resin that is disposed so as to cover the inner case 1, wherein a reservoir 130 that stores the hydraulic fluid is formed between the outer case 2 and the inner case 1; a spring 5, which serves as a biasing member, that is accommodated within the reservoir 130 and biases the inner case 1 relative to the outer case 2 in the axial direction of the outer case 2; a piston 3 that is slidably inserted into the inner case 1 and partitions the inside of the inner case 1 into an extension-side chamber 110 and a contraction-side chamber 120; and a piston rod 4 that is inserted into the inner case 1 such that it can move into and out of the inner case 1 and that is connected at one end to the piston 3. The shock absorber 100 is connected at the other end of the piston rod 4 to a vehicle body via an upper mount (not illustrated), and is joined to a support member 50 such as a knuckle that supports a vehicle wheel via brackets 2d formed on the outer case 2.

The inner case 1 includes the following: a cylindrical inner tube 6; a rod guide 7 that is slidably inserted into an end of the inner tube 6 on the extension-side chamber 110 side, and slidably supports the piston rod 4; and a base valve 8 that is fitted into an end of the inner tube 6 on the contraction-side chamber 120 side. These members that constitute the inner case 1 are formed from a steel material or aluminum alloy.

The rod guide 7 includes the following: a small-diameter part 7a that is slidably inserted into the inner tube 6; a large-diameter part 7b that has a larger diameter than that of the small-diameter part 7a; and a rod insertion hole 7c into which the piston rod 4 is inserted, and which is formed to penetrate in the axial direction. A seal member 10 is provided on an outer peripheral surface of the small-diameter part 7a that slidingly contacts an inner peripheral surface of the inner tube 6. Even if the rod guide 7 slides relative to the inner tube 6, any gaps between the inner tube 6 and the rod guide 7 are sealed by the seal member 10. Therefore, hydraulic oil is prevented from flowing out from the extension-side chamber 110 to the reservoir 130. Further, a bush 9 is attached to the rod insertion hole 7c. The piston rod 4 that is inserted into the rod insertion hole 7c is slidably supported by the rod guide 7 via the bush 9.

The base valve 8 includes passages 8a and 8b which establish communication between the contraction-side chamber 120 and the reservoir 130. A check valve 16, which opens during extension of the shock absorber 100 to open the passage 8a, is provided in the passage 8a. A damping valve 17, which opens during contraction of the shock absorber 100 to open the passage 8b and applies resistance against the flow of hydraulic oil moving from the contraction-side chamber 120 to the reservoir 130 through the passage 8b, is provided in the passage 8b.

The piston 3 that is slidably inserted into the inner case 1 includes passages 3a and 3b which establish communication between the extension-side chamber 110 and the contraction-side chamber 120. A damping valve 18, which opens during extension of the shock absorber 100 to open the passage 3a and applies resistance against the flow of hydraulic oil moving from the extension-side chamber 110 to the contraction-side chamber 120 through the passage 3a, is provided in the passage 3a. A check valve 19, which opens during contraction of the shock absorber 100 to open the passage 3b, is provided in the passage 3b.

As shown in FIGS. 1 and 2, the outer case 2 is a member made of synthetic resin in which the following are integrally formed by injection molding: an outer tube 2a that is formed coaxially with the inner tube 6; a caulking part 2b that is bent inwardly in the radial direction on the end of the outer tube 2a on the extension-side chamber 110 side; a closing part 2c that closes the end of the outer tube 2a on the contraction-side chamber 120 side; a pair of brackets 2d that extend opposing each other along the axial direction from the outer periphery of the outer tube 2a; and a suspension spring receiving part 2f that is formed in an approximately annular shape on the outer periphery of the outer tube 2a. As the synthetic resin, a synthetic resin comprising carbon fibers in order to improve the strength and rigidity is preferably used.

As shown in FIG. 2, the support member 50 such as a knuckle that supports the vehicle wheel is inserted between the pair of brackets 2d and is joined by bolts (not illustrated) that are inserted into bolt holes 2e formed in the brackets 2d. In this way, the shock absorber 100 is connected to the vehicle wheel side via the brackets 2d that extend toward the side of the outer case 2. Therefore, a load that is input from the vehicle wheel side acts not only in the axial direction but also the radial direction of the shock absorber 100.

The suspension spring receiving part 2f, which is formed on the outer periphery of the outer case 2 similar to the brackets 2d, supports one end of a suspension spring (not illustrated). Ribs are preferably provided between the outer case 2 and the brackets 2d and between the outer case 2 and the suspension spring receiving part 2f for the purpose of reinforcement.

Ribs 2g which serve as protrusions that protrude toward the outer peripheral surface of the inner tube 6 are formed on the inner peripheral surface of the outer tube 2a of the outer case 2. A plurality of the ribs 2g are provided spaced apart by intervals in the circumferential direction along the inner peripheral surface of the outer tube 2a, and the ribs 2g abut the outer peripheral surface of the inner tube 6. Therefore, even if a load from the vehicle wheel side acts in the radial direction of the outer case 2 via the brackets 2d, shifting of the inner case 1 in the radial direction relative to the outer case 2 is suppressed. Further, since a plurality of the ribs 2g are provided, the force which acts in the radial direction of the outer case 2 is distributed, and thus shifting of the inner case 1 relative to the outer case 2 can be stably suppressed.

The ribs 2g as shown in FIG. 2 are provided in six locations, but the number of ribs 2g is not limited thereto, and any number of ribs 2g can be provided. The axial direction length of the ribs 2g is preferably longer than the axial direction length of the brackets 2d. In this case, a load that is input via the brackets 2d is distributed compared to a case in which the axial direction length of the ribs 2g is shorter than the axial direction length of the brackets 2d, and thus shifting of the inner case 1 relative to the outer case 2 can be stably suppressed. Since the ribs 2g are provided spaced apart by intervals in the circumferential direction along the inner peripheral surface of the outer tube 2a, communication between the passages 8a and 8b provided in the base valve 8 and the reservoir 130 is not inhibited.

An oil seal 11 is provided between the rod guide 7 of the inner case 1 and the outer case 2. The oil seal 11 includes the following: an annular seal main body 11 a; an inner periphery seal part 11b that is attached to the inner periphery side of the seal main body 11a and slidingly contacts the outer periphery of the piston rod 4; and an outer periphery seal 11c that is attached to the outer periphery side of the seal main body 11a and contacts the inner periphery of the outer case 2 and the top surface of the rod guide 7. The oil seal 11 is accommodated within the outer case 2 together with the inner case 1, and in this state, the oil seal 11 is fixed within the outer case 2 due to the caulking part 2b of the outer case 2 being bent inwardly in the radial direction. In detail, the seal main body 11a is sandwiched between the caulking part 2b of the outer case 2 and the large-diameter part 7b of the rod guide 7, and thereby the oil seal 11 is retained. Hydraulic oil is prevented from leaking to the outside from between the piston rod 4 and the inner case 1 by the inner periphery seal part 11b, and hydraulic oil is prevented from leaking to the outside from between the inner case 1 and the outer case 2 by the outer periphery seal 11 c.

The spring 5 is a coil spring, and in a compressed state, one end of the spring 5 is locked to the outer peripheral surface of the inner tube 6 and the other end is locked to the rod guide 7. In detail, as shown in FIG. 1, a C-pin 12 having a circular cross-section engages with the outer peripheral surface of the inner tube 6, and an annular spring seat 13 that locks the one end of the spring 5 is positioned in the axial direction by the C-pin 12. Meanwhile, the other end of the spring 5 is locked to a stepped part 7d between the small-diameter part 7a and the large-diameter part 7b of the rod guide 7. The spring seat 13 may be formed integrally with the inner tube 6, or may be fixed to the inner tube 6 by welding or the like. The spring 5 shown in FIG. 1 is a coil spring having a circular cross-section, but the spring 5 is not limited thereto, and may be an angular spring having a rectangular cross-section or may be configured by stacking disc springs.

The biasing force of the spring 5 acts to pull apart the inner tube 6 and the rod guide 7 in the axial direction. Axial direction movement of the inner tube 6 is restricted by the closing part 2c of the outer case 2 via the base valve 8, and axial direction movement of the rod guide 7 is restricted by the caulking part 2b of the outer case 2 via the oil seal 11. Therefore, the spring 5 biases the inner case 1 relative to the outer case 2 in the axial direction of the outer case 2.

In general, in members that are injection molded using a resin, deformation over time called creep occurs if a state in which a constant load is applied continues. As described above, the inner case 1 is constantly pressed against the outer case 2 by the spring 5, and thus even if the outer case 2, which is made of a resin, deforms due to creep, the inner case 1 is maintained in a state in which the inner case 1 abuts the outer case 2. As a result, any changes in the shape in the axial direction of the outer case 2 are compensated.

Herein, if the inner case 1 can be strongly pressed in the axial direction against the outer case 2, it is believed that any changes in the shape in the axial direction of the outer case 2 can be compensated and shifting of the inner case 1 in the radial direction relative to the outer case 2 can be suppressed. However, in order to strongly press the inner case 1 against the outer case 2, it is necessary to increase the biasing force of the spring 5 by increasing the length of the spring 5 to increase the amount of compression or by increasing the wire diameter, etc. Furthermore, the strength of the spring seat 13 and the caulking part 2b of the outer case 2, etc. upon which the biasing force of the spring 5 acts must be set so that these members can withstand the biasing force of the spring 5.

Meanwhile, in the shock absorber 100 according to the first embodiment, as explained above, shifting of the inner case 1 in the radial direction relative to the outer case 2 is suppressed by the ribs 2g formed on the outer case 2. Therefore, the magnitude of the biasing force of the spring 5 is sufficient as long as any changes in the shape in the axial direction of the outer case 2 due to creep are compensated, and the inner tube 6 does not move together with the piston 3 against the biasing force of the spring 5 due to friction between the piston 3 and the inner tube 6 during extension of the shock absorber 100.

In this way, if the shifting of the inner case 1 in the radial direction relative to the outer case 2 is suppressed by the ribs 2g formed on the outer case 2, the biasing force of the spring 5 can be reduced, i.e. the size of the spring 5 can be reduced, compared to a case in which the above-mentioned shifting is suppressed by the biasing force of the spring 5. Further, it also becomes unnecessary to enhance the strength of the areas upon which the biasing force of the spring 5 acts.

Next, the operation of the shock absorber 100 will be explained.

During extension of the shock absorber 100 in which the piston rod 4 moves out of the inner case 1, hydraulic oil moves via the passage 3a from the extension-side chamber 110, in which the volume is reduced due to the movement of the piston 3, to the contraction-side chamber 120, in which the volume is expanded. Further, hydraulic oil in an amount equivalent to the volume of the piston rod 4 that has moved out of the inner case 1 is supplied from the reservoir 130 through the passage 8a to the contraction-side chamber 120.

At this time, resistance is applied by the damping valve 18 against the flow of hydraulic oil passing through the passage 3a, and thus a damping force is generated.

During contraction of the shock absorber 100 in which the piston rod 4 moves into the inner case 1, hydraulic oil moves via the passage 3b from the contraction-side chamber 120, in which the volume is reduced due to the movement of the piston 3, to the extension-side chamber 110, in which the volume is expanded. Further, hydraulic oil in an amount equivalent to the volume of the piston rod 4 that has moved into the inner case 1 is discharged from the contraction-side chamber 120 through the passage 8b to the reservoir 130.

At this time, resistance is applied by the damping valve 17 against the flow of hydraulic oil passing through the passage 8b, and thus a damping force is generated.

As described above, in the shock absorber 100, hydraulic oil is supplied from the reservoir 130 to the contraction-side chamber 120 during extension, and hydraulic oil is discharged from the contraction-side chamber 120 to the reservoir 130 during contraction. Thereby, volume changes caused by the piston rod 4 moving into/out of the inner case 1 are compensated.

According to the first embodiment described above, the following effects are achieved.

The inner case 1 is biased in the axial direction relative to the outer case 2, which is made of resin, by the spring 5. Further, the inner case 1 and the outer case 2 abut each other in the radial direction via the ribs 2g formed on the outer case 2. Therefore, even in the case that the outer case 2 of the shock absorber 100 is made of a resin, shifting of the inner case 1 relative to the outer case 2 in the axial direction and the radial direction can be suppressed without increasing the size of the shock absorber 100 main body.

### <Second Embodiment>

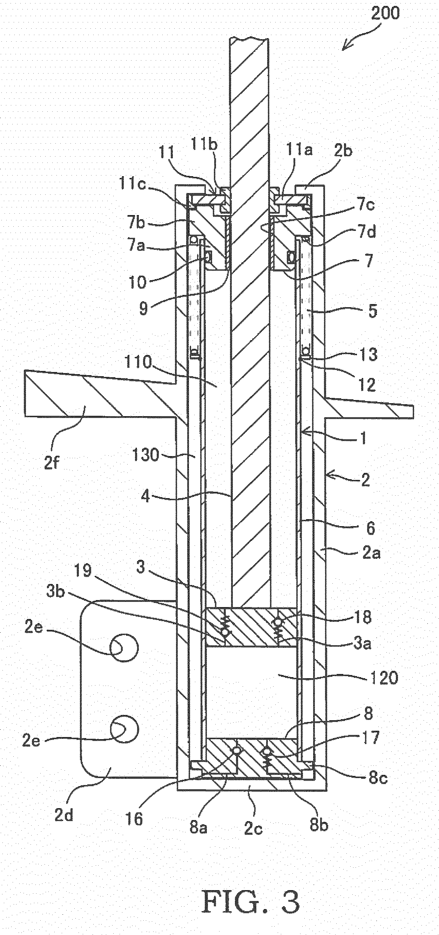

Next, a shock absorber 200 according to a second embodiment of the present invention will now be explained referring to FIG. 3. The following explanation will focus on the points of difference from the shock absorber 100 according to the first embodiment, and those constitutions which are the same as the first embodiment will be assigned the same reference numeral and explanations thereof will be omitted.

The shock absorber 200 differs from the first embodiment in that the protrusions are provided on the inner case 1 instead of the outer case 2. Specially, as shown in FIG. 3, ribs 8c which serve as protrusions that protrude toward the inner peripheral surface of the outer case 2 are formed on the outer peripheral surface of the base valve 8 that is fitted into the end of the inner tube 6 on the contraction-side chamber 120 side. A plurality of the ribs 8c are provided spaced apart by intervals in the circumferential direction along the outer peripheral surface of the base valve 8, and the ribs 8c abut the inner peripheral surface of the outer case 2. Therefore, shifting of the inner case 1 in the radial direction relative to the outer case 2 is suppressed.

Similar to the first embodiment, the spring 5 that biases the inner case 1 in the axial direction relative to the outer case 2 is provided. Therefore, in the second embodiment as well, any changes in the shape in the axial direction of the outer case 2 due to creep or the like can be compensated.

In the second embodiment, the ribs 8c are formed on the outer peripheral surface of the base valve 8. Instead of this constitution, the ribs may be formed on the outer peripheral surface of the inner tube 6. In this case, the axial direction length of the ribs can be increased, and thus a load that is input via the brackets 2d is distributed and shifting of the inner case 1 relative to the outer case 2 can be stably suppressed.

Similar to the shock absorber 100 according to the first embodiment, the one end of the spring 5 in the shock absorber 200 according to the second embodiment may be locked to the outer peripheral surface of the inner tube 6, or may be locked to the ribs 8c that protrude from the outer peripheral surface of the base valve 8.

According to the second embodiment described above, the following effects are achieved.

The inner case 1 is biased in the axial direction relative to the outer case 2, which is made of resin, by the spring 5. Further, the inner case 1 and the outer case 2 abut each other in the radial direction via the ribs 8c formed on the base valve 8 of the inner case 1. Therefore, even in the case that the outer case 2 of the shock absorber 200 is made of a resin, shifting of the inner case 1 relative to the outer case 2 in the axial direction and the radial direction can be suppressed without increasing the size of the shock absorber 200 main body.

The constitutions, operations, and effects of the embodiments of the present invention will now be summarized below.

The shock absorber 100, 200 includes the following: the inner case 1 that is filled with hydraulic fluid; the outer case 2 made of resin that is disposed so as to cover the inner case 1, wherein the reservoir 130 that stores the hydraulic fluid is formed between the outer case 2 and the inner case 1; the spring 5 which is accommodated within the reservoir 130 and biases the inner case 1 relative to the outer case 2 in the axial direction of the outer case 2; and the ribs 2g, 8c formed on either one of the outer peripheral surface of the inner case 1 and the inner peripheral surface of the outer case 2 so as to protrude toward and abut the other one of the outer peripheral surface of the inner case 1 and the inner peripheral surface of the outer case 2.

If an attempt is made to suppress shifting of the inner case 1 relative to the outer case 2 in the axial direction and the radial direction using only the spring 5, the biasing force of the spring 5 must be increased. In order to increase the biasing force of the spring 5, the length or the outer diameter of the spring 5 must be increased. Further, in order to accommodate this larger spring 5, the size of the shock absorber 100, 200 main body must also be increased.

On the other hand, in the constitution of the embodiments of the present invention, the inner case 1 is biased in the axial direction relative to the outer case 2, which is made of resin, by the spring 5, and the inner case 1 and the outer case 2 abut each other in the radial direction via the ribs 2g, 8c. Therefore, shifting of the inner case 1 relative to the outer case 2 in the axial direction is suppressed by the spring 5, whereas shifting of the inner case 1 relative to the outer case 2 in the radial direction is suppressed by the ribs 2g, 8c.

In this way, shifting in the axial direction and shifting in the radial direction are each suppressed by different means, and thus the size of the spring 5 can be reduced compared to the case in which the shifting in both directions is suppressed using only the spring 5. As a result, even in the case that the outer case 2 of the shock absorber 100, 200 is made of a resin, shifting of the inner case 1 relative to the outer case 2 in the axial direction and the radial direction can be suppressed without increasing the size of the shock absorber 100, 200 main body.

A plurality of the ribs 2g, 8c are formed spaced apart by intervals in the circumferential direction along the outer peripheral surface of the inner case 1 or the inner peripheral surface of the outer case 2.

In this constitution, since the inner case 1 and the outer case 2 abut each other via the plurality of ribs 2g, 8c, a force that acts in the radial direction of the outer case 2 is distributed, and thus shifting in the radial direction can be stably suppressed.

The shock absorber 100, 200 further includes: the piston 3 that is slidably inserted into the inner case 1 and partitions the inside of the inner case 1 into the extension-side chamber 110 and the contraction-side chamber 120; and the piston rod 4 that is inserted into the inner case 1 such that it can move into and out of the inner case 1 and that is connected to the piston 3. The inner case 1 includes the following: the cylindrical inner tube 6; and the rod guide 7 that is slidably inserted into the inner periphery of one end of the inner tube 6, wherein the rod insertion hole 7c into which the piston rod 4 is inserted is formed in the rod guide 7. The spring 5 is locked at one end to the outer peripheral surface of the inner tube 6 and locked at the other end to the rod guide 7.

In this constitution, since the reservoir 130 is effectively utilized as a chamber for accommodating the spring 5, it is not necessary to secure a separate space for accommodating the spring 5. As a result, shifting of the inner case 1 relative to the outer case 2 in the axial direction and the radial direction can be suppressed without increasing the size of the shock absorber 100, 200 main body.

Further, the inner case 1 includes the following: the cylindrical inner tube 6; and the base valve 8 that is fitted into the inner periphery of one end of the inner tube 6 and has the passages 8a, 8b that establish communication between the inside of the inner tube 6 and the reservoir 130. The ribs 8c protrude from the outer peripheral surface of the base valve 8 toward the inner peripheral surface of the outer case 2.

In this constitution, the inner case 1 and the outer case 2 abut each other in the radial direction via the ribs 8c which protrude from the outer peripheral surface of the base valve 8 that constitutes the inner case 1 toward the inner peripheral surface of the outer case 2. Therefore, shifting of the inner case 1 relative to the outer case 2 in the radial direction can be easily suppressed by merely modifying the shape of the base valve 8 which is one member that constitutes the inner case 1.

In addition, the shock absorber 100 further includes the pair of brackets 2d that extend opposing each other along the axial direction from the outer periphery of the outer case 2 and are joined to the support member 50 that supports the vehicle wheel. The axial direction length of the ribs 2g is longer than the axial direction length of the brackets 2d.

In this constitution, a load that is input via the brackets 2d is distributed compared to a case in which the axial direction length of the ribs 2g is shorter than the axial direction length of the brackets 2d. Therefore, shifting of the inner case 1 relative to the outer case 2 can be stably suppressed.

Embodiments of the present invention were described above, but the above embodiments are merely examples of applications of the present invention, and the technical scope of the present invention is not limited to the specific constitutions of the above embodiments.

For example, in the above-described embodiments, the shock absorber 100, 200 is used in a vehicle such as an automobile, but the shock absorber may also be used in other vehicles such as a train as well as in a building.

Further, in the above-described embodiments, hydraulic oil is used as the hydraulic fluid, but other liquids such as water may also be used.

In addition, in the above-described embodiments, when accommodating the inner case 1 or the oil seal 11 in the outer case 2, the caulking part 2b is bent inwardly in the radial direction so as to restrict axial direction movement of the inner case 1 or the oil seal 11 by the caulking part 2b. Instead of the caulking part 2b, axial direction movement of the inner case 1 or the oil seal 11 may be restricted using a cap member joined to the end of the outer case 2. Further, a cap made of resin may be welded to the end of the outer case 2, and axial direction movement of the inner case 1 may be restricted by this resin cap.

This application claims priority based on Japanese Patent Application No. 2014-187260 filed with the Japan Patent Office on September 16, 2014, the entire contents of which are incorporated into this specification.

## Claims

1. A shock absorber comprising:
an inner case filled with hydraulic fluid;
an outer case made of resin disposed so as to cover the inner case, the outer case forming a reservoir for storing the hydraulic fluid between the outer case and the inner case;
a biasing member accommodated within the reservoir, the biasing member being configured to bias the inner case relative to the outer case in the axial direction of the outer case;
and protrusions formed on either one of an outer peripheral surface of the inner case and an inner peripheral surface of the outer case so as to protrude toward and abut the other one of the outer peripheral surface of the inner case and the inner peripheral surface of the outer case.

2. The shock absorber according to claim 1, wherein the protrusions are a plurality of ribs formed spaced apart by intervals in the circumferential direction along the outer peripheral surface of the inner case or the inner peripheral surface of the outer case.

3. The shock absorber according to claim 1, further comprising:
a piston slidably inserted into the inner case, the piston partitioning the inside of the inner case into an extension-side chamber and a contraction-side chamber; and
a piston rod inserted into the inner case such that it can move into and out of the inner case, the piston rod being connected to the piston,
wherein the inner case comprises:
a cylindrical inner tube; and
a rod guide slidably inserted into the inner periphery of one end of the inner tube, the rod guide being formed a rod insertion hole into which the piston rod is inserted,
and wherein the biasing member is locked at one end to the outer peripheral surface of the inner tube and locked at the other end to the rod guide.

4. The shock absorber according to claim 1, wherein the inner case comprises:
a cylindrical inner tube; and
a base valve fitted into the inner periphery of one end of the inner tube , the base valve having a passage that establishes communication between the inside of the inner tube and the reservoir,
wherein the protrusions protrude from the outer peripheral surface of the base valve toward the inner peripheral surface of the outer case.

5. The shock absorber according to claim 1, further comprising a pair of brackets that extend opposing each other along the axial direction from the outer periphery of the outer case and are joined to a support member that supports a vehicle wheel,
wherein an axial direction length of the protrusions is longer than an axial direction length of the brackets.
